(19) Europäisches Patentamt / European Patent Office / Office européen des brevets

(11) **EP 1 496 316 B1**

(12) **EUROPEAN PATENT SPECIFICATION**

(45) Date of publication and mention
of the grant of the patent:
**16.07.2014 Bulletin 2014/29**

(21) Application number: **03708529.7**

(22) Date of filing: **10.03.2003**

(51) Int Cl.:
**F24F 11/02** *(2006.01)*

(86) International application number:
**PCT/JP2003/002813**

(87) International publication number:
**WO 2003/081140 (02.10.2003 Gazette 2003/40)**

(54) **AIR CONDITIONER, AND METHOD OF CONTROLLING AIR CONDITIONER**

KLIMAANLAGE UND VERFAHREN ZUR STEUERUNG EINER KLIMAANLAGE

CLIMATISEUR ET PROCÉDÉ DE COMMANDE DE CLIMATISEUR

(84) Designated Contracting States:
**AT BE BG CH CY CZ DE DK EE ES FI FR GB GR HU IE IT LI LU MC NL PT RO SE SI SK TR**

(30) Priority: **27.03.2002 JP 2002089150**

(43) Date of publication of application:
**12.01.2005 Bulletin 2005/02**

(73) Proprietor: **DAIKIN INDUSTRIES, LTD.
Osaka-shi, Osaka 530-8323 (JP)**

(72) Inventors:
- **KATAOKA, Hidehiko
Kusatsu-shi,
Shiga 525-0044 (JP)**

- **MORITA, Takashi
Kusatsu-shi,
Shiga 525-0044 (JP)**

(74) Representative: **HOFFMANN EITLE
Patent- und Rechtsanwälte
Arabellastrasse 4
81925 München (DE)**

(56) References cited:
**JP-A- 2001 304 713     JP-A- 2001 304 713**

**Description**

(Technical Field)

The present invention relates to an air conditioner, particularly a multiple-unit type air conditioner having one outdoor unit and a plurality of indoor units. The present invention also relates to a control method for a multiple-unit type air conditioner.

(Background Art)

One type of air conditioner having an outdoor unit and an indoor unit is the so-called multiple-unit type air conditioner having one outdoor unit and a plurality of indoor units. Such an air conditioner, which includes the features of the preamble of claim 1, is known from JP-A-2001-304713.

In multiple-unit type air conditioners, the outdoor unit has a compressor and an outdoor heat exchanger and each of the indoor units has an indoor heat exchanger. A refrigerant circuit links the outdoor unit and the indoor units together and electric motor operated valves - one corresponding to each indoor heat exchanger - are provided in the refrigerant circuit to adjust the amount of refrigerant flowing in to each indoor heat exchanger. When the air conditioner operates in heating mode, high-temperature refrigerant is distributed from the compressor to the indoor heat exchangers and each indoor heat exchanger executes heating mode. During heating mode, the opening degrees of the electric motor operated valves are adjusted, and thus the amount of refrigerant is adjusted, in accordance with the temperature of the discharge pipe of the compressor and the temperatures of the rooms in which the indoor units are installed, etc. However, when a plurality of rooms are air-conditioned using this kind of air conditioner, not all of the indoor units are necessarily run. That is, there are times when one or more indoor units are run and the remaining indoor units are stopped. When the air conditioner is operating in heating mode and there are rooms in which the indoor unit is stopped (hereinafter, such rooms are called "stopped rooms"), the electric motor operated valves corresponding to the stopped rooms are opened to some degree to allow a small amount of refrigerant to flow so as to avoid the accumulation of refrigerant in the indoor heat exchanger. If the opening degrees of the electric motor operated valves corresponding to the stopped rooms are fixed, then the opening degrees will not be able to accommodate changes in the actual operating conditions and it will be difficult to achieve stable refrigerant control. Therefore, a proposal has been made for executing feedback control of the opening degree of the electric motor operated valves corresponding to the stopped rooms based on the temperature of the discharge pipe. Using such an approach, the amount of refrigerant flowing into the stopped indoor units can be adjusted in accordance with the actual operating conditions and the air conditioner system as a whole can execute stable refrigerant control.

However, since all of the electric motor operated valves corresponding to stopped rooms are controlled in exactly the same manner in an air conditioner executing the kind of control just described, there is the possibility that some problems will occur in cases in which there are a plurality of stopped rooms because of differences in the ambient conditions in the stopped rooms and the positions in which stopped rooms are located. For example, if one of the stopped rooms has a lower temperature than the other stopped rooms, liquid refrigerant will tend to accumulate in the indoor heat exchanger of the stopped room having the lower temperature because the refrigerant will release heat more readily in that stopped room. If the electric motor operated valve corresponding to the lower-temperature stopped room is controlled to a similar opening degree as the electric motor operated valves corresponding to the other stopped rooms, the possibility that liquid refrigerant will accumulate in the indoor heat exchanger of the low-temperature stopped room will increase. Similarly, when one of the stopped rooms is on a lower floor than the other stopped rooms, liquid refrigerant will tend to accumulate in the indoor heat exchanger of the stopped room on the lower floor because of the pressure difference existing due to the difference in altitude. When liquid refrigerant accumulates in this way, the amount of refrigerant circulating through the entire system decreases and the air conditioner operates under conditions resembling insufficient refrigerant gas charging. Operating under such conditions causes insufficient heating capacity and declined heating efficiency. Operating under such conditions also encourages the temperature of the compressor to increase and can feasibly affect the service life of the compressor.

Even if liquid accumulation does not occur, the amount of liquid refrigerant residing in each of the stopped rooms can vary. In such a situation, in order to ensure that a sufficient amount of refrigerant circulates through the entire system, it is necessary to open the electric motor operated valves corresponding to the stopped rooms where a large amount of liquid refrigerant resides until the liquid refrigerant is discharged. However, in an air conditioner executing the kind of valve control described above, the electric motor operated valves are controlled in a uniform manner and when the electric motor operated valves corresponding to the stopped rooms having a large amount of liquid refrigerant are opened, the electric motor controlled valves corresponding to the other stopped rooms are also opened, thereby causing refrigerant noise to occur in the stopped rooms where liquid refrigerant does not reside.

(Disclosure of the Invention)

The object of the present invention is to provide a multiple-unit type air conditioner capable of executing stable refrigerant control even when the multiple-unit type air conditioner is operating in heating mode with a plurality of the indoor units in a stopped condition and to provide a control method for such an air conditioner.

An air conditioner as described in claim 1 is provided with an outdoor unit having an outdoor heat exchanger, a plurality of indoor units each having an indoor heat exchanger, a refrigerant circuit, electric motor operated valves, a discharge pipe temperature sensor, an electric motor operated valve opening degree control means, and an electric motor operated valve opening degree revising means. The refrigerant circuit links the outdoor heat exchanger, a compressor, and the indoor heat exchangers together. The electric motor operated valves are provided in the refrigerant circuit and configured to adjust the amount of refrigerant flowing into each of the indoor heat exchangers, respectively. The discharge pipe temperature sensor is configured to detect the temperature of the discharge pipe of the compressor. In situations in which a plurality of indoor units are stopped while the air conditioner is operating in heating mode, the electric motor operated valve opening degree control means controls the opening degrees of the electric motor operated valves corresponding to the stopped indoor units based on the temperature of the discharge pipe. The electric motor operated valve opening degree revising means revises the opening degree of the electric motor operated valves corresponding to the stopped indoor units on an individual basis. The electric motor operated valves corresponding to the stopped indoor units are the electric motor operated valves that adjust the amount of refrigerant flowing into the indoor heat exchangers of the stopped indoor units.

With the air conditioner described in claim 1, the opening degrees of the electric motor operated valves corresponding to the stopped indoor units are not all controlled uniformly across the board but, instead, are revised individually by the electric motor operated valve opening degree revising means. Consequently, the opening degree of each electric motor operated valve can be revised to the most appropriate opening degree in accordance with the temperature, location, and other refrigerant-affecting ambient differences of the respective rooms in which the indoor units are installed. As a result, this air conditioner can execute stable refrigerant control even when it is operating in heating mode with a plurality of the indoor units in a stopped condition.

The invention described in claim 2 is an air conditioner as described in claim 1, further provided with liquid refrigerant pipe temperature sensors configured to detect the temperature of the liquid refrigerant pipes between each indoor heat exchanger and the corresponding electric motor operated valve, respectively. Also, in situations in which a plurality of indoor units are stopped while the air conditioner is operating in heating mode, the electric motor operated valve opening degree revising means revises the opening degree of each electric motor operated valve corresponding to a stopped indoor unit individually in such a manner that the liquid refrigerant pipe temperature of each stopped indoor unit is held within a prescribed difference with respect to the average value of the liquid refrigerant pipe temperatures of all the stopped indoor units.

With the air conditioner described in claim 2, the opening degree of each electric motor operated valve is controlled individually in such a manner that the liquid refrigerant pipe temperature of each stopped indoor unit is held within a prescribed difference with respect to the average value of the liquid refrigerant pipe temperatures of all the stopped indoor units. Consequently, with this air conditioner, the amount of refrigerant flowing through each of the stopped indoor units can be approximately equalized. As a result, it is possible to restrain the problems that occur when liquid accumulates in the indoor heat exchangers and when the amounts of refrigerant flowing through the stopped indoor units are different, such problems including the emission of refrigerant noise and the decline in the heating capacity of the air conditioner as a whole.

The invention described in claim 3 is a control method for an air conditioner provided with the following: an outdoor unit having an outdoor heat exchanger; a plurality of indoor units each having an indoor heat exchanger; a refrigerant circuit linking the outdoor heat exchanger, a compressor, and the indoor heat exchangers; a plurality of electric motor operated valves provided in the refrigerant circuit and configured to adjust the amount of refrigerant flowing into each of the indoor heat exchangers; and a discharge pipe temperature sensor configured to detect the temperature of the discharge pipe of the compressor. This control method has a first step and a second step. The first step serves to set the opening degree of the electric motor operated valves corresponding to the stopped indoor units based on the temperature of the discharge pipe when a plurality of indoor units are stopped while the air conditioner is operating in heating mode. The second step serves to revise the opening degrees of the electric motor operated valves corresponding to the stopped indoor units on an individual basis.

With the air conditioner control method described in claim 3, the opening degrees of the electric motor operated valves corresponding to the stopped indoor units are not all controlled uniformly across the board but, instead, are revised on an individual bases. Consequently, the opening degree of each electric motor operated valve can be revised to the most appropriate opening degree in accordance with the temperature, location, and other refrigerant-affecting ambient differences of the respective rooms in which the indoor units are installed. As a result, with this air conditioner control method, it is possible to execute stable refrigerant control even when the air conditioner is operating in heating mode with a plurality of the indoor units in a stopped condition.

(Brief Descriptions of the Drawings)

Figure 1 is the diagrammatic view of an air conditioner.
Figurer 2 is a schematic view of the refrigerant circuit of the air conditioner.
Figure 3 is a control block diagram.
Figure 4 is a control flowchart describing the control of the opening degrees of the electric motor operated valves.
Figure 5 is a control flowchart describing the revision of the opening degrees of the electric motor operated valves.

(Preferred Embodiments of the Invention)

<Constituent Features of the Air Conditioner>

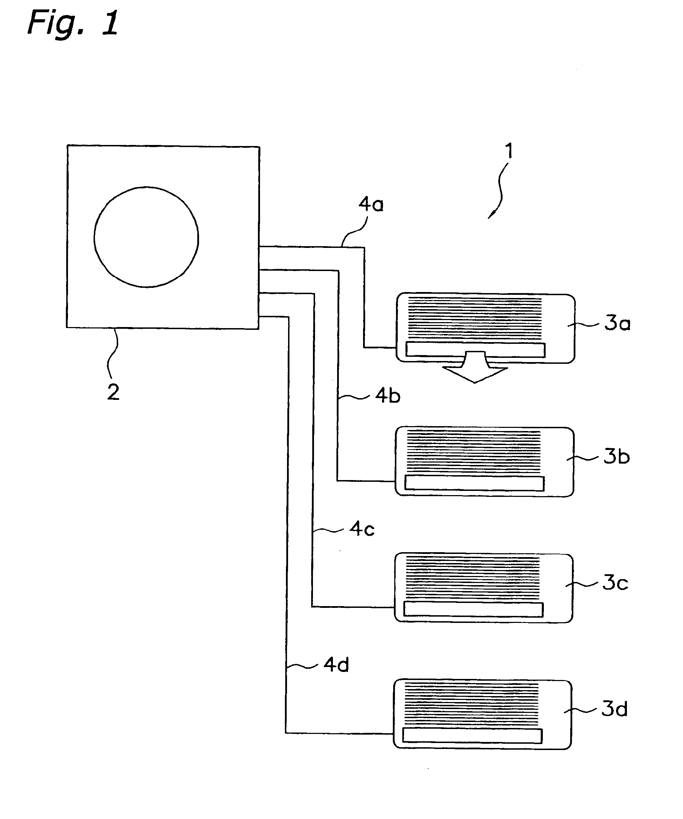

Figure 1 shows an air conditioner 1 that employs an embodiment of the present invention.
The air conditioner 1 is a so-called multiple-unit type air conditioner in which a plurality of indoor units are connected to a single outdoor unit.
This air conditioner 1 has four indoor units 3a, 3b, 3c, 3d connected to one outdoor unit 2 by refrigerant pipes 4a, 4b, 4c, 4d. The four indoor units 3a, 3b, 3c, 3d are arranged in separate rooms. In this explanation, it is assumed that only the indoor unit 3a is operating in heating mode and the other three indoor units 3b, 3c, 3d are in a stopped condition.

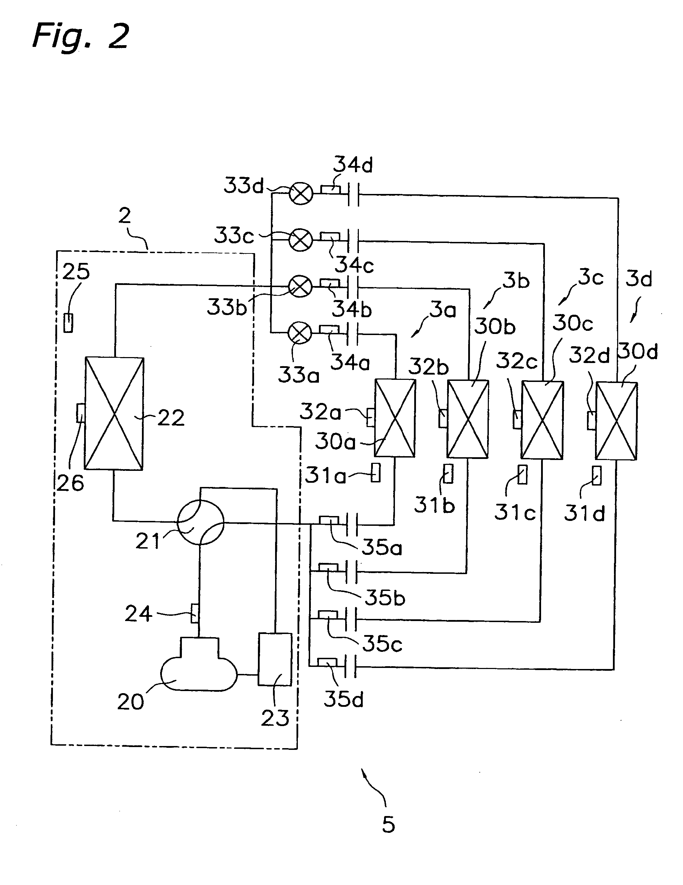

Figure 2 shows a schematic view of the refrigerant circuit 5 of the air conditioner 1.
The refrigerant circuit 5 is made up of the outdoor unit 2 and the four indoor units 3a, 3b, 3c, 3d connected in parallel to the outdoor unit 2.
The outdoor unit 2 is provided with a compressor 20, a four-way switching valve 21, an outdoor heat exchanger 22, an accumulator 23, etc. A discharge pipe thermistor 24 is provided on the discharge side of the compressor 20 in order to detect the temperature of the discharge pipe on the discharge side of the compressor 20. The outdoor unit 2 is also provided with an outdoor thermistor 25 for detecting the temperature of the outdoor air and an outdoor heat exchanger thermistor 26 for detecting the temperature of the outdoor heat exchanger 22.
The indoor unit 3a is provided with an indoor heat exchanger 30a and an electric motor operated valve 33a and the indoor heat exchanger 30a and the electric motor operated valve 33a are connected in series. The electric motor operated valve 33a is provided on the outlet side of the indoor heat exchanger 30a and serves to adjust the amount of refrigerant flowing into the indoor heat exchanger 30a. The indoor unit 3a is also provided with a room temperature thermistor 31a for detecting the temperature of the room in which the indoor unit 3a is installed and an indoor heat exchanger thermistor 32a for detecting the temperature of the indoor heat exchanger 30a. A liquid refrigerant pipe thermistor 34a is provided in the piping between the indoor heat exchanger 30a and the electric motor operated valve 33a in order to detect the temperature of the liquid refrigerant pipe between the indoor heat exchanger 30a and the electric motor operated valve 33a. A gaseous refrigerant pipe thermistor 35a is provided on the gaseous refrigerant pipe side of the indoor heat exchanger 30a in order to detect the temperature of the refrigerant passing there-through.
Similarly, the other indoor units 3b, 3c, 3d are also each provided with an indoor heat exchanger, an electric motor operated valve, and thermistors, which are indicated in Figure 2 using the same reference numerals.
It is not necessary for the electric motor operated valves 33a, 33b, 33c, 33d to be built into the indoor units 3a, 3b, 3c, 3d. It is also acceptable for the electric motor operated valves to be provided outside the indoor units 3a, 3b, 3c, 3d, for example, inside branch units or the like connected between each indoor unit 3a, 3b, 3c, 3d and the outdoor unit 2.

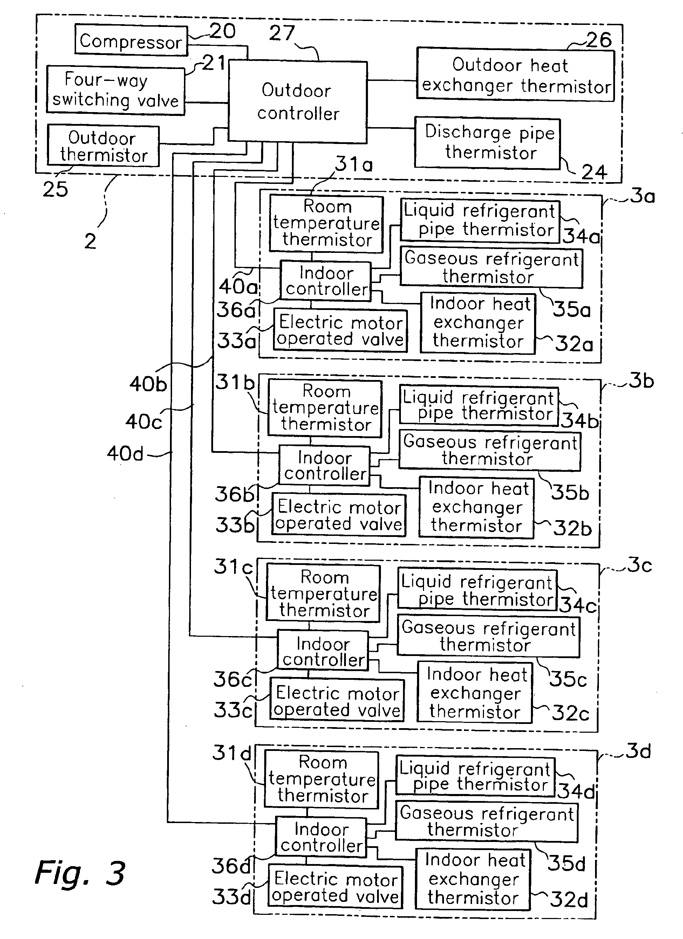

Figure 3 shows a control block diagram for the air conditioner 1.
The outdoor unit 2 is provided with an outdoor controller 27 that includes a microprocessor, a ROM, a RAM, and various interfaces.
The outdoor controller 27 is connected to the discharge pipe thermistor 24, the outdoor thermistor 25, the outdoor heat exchanger thermistor 26, and other sensors and receives detection signals from the sensors.
The outdoor controller 27 is connected to and configured to deliver control signals to the compressor 20, the four-way switching valve 21, and other components so as to control the components during operation of the air conditioner.
The indoor unit 3a is provided with an indoor controller 36a that includes a microprocessor, a ROM, a RAM, and various interfaces similar to those of the outdoor unit 2.
The indoor controller 36a is connected to the room temperature thermistor 31a, the indoor heat exchanger thermistor 32a, the liquid refrigerant pipe thermistor 34a, and the gaseous refrigerant pipe thermistor 35a and is configured to receive detection signals from these sensors.

The indoor controller 36a is connected to the electric motor operated valve 33a provided in the indoor unit 3a and is configured to send control signals to the electric motor operated valve 33a so as to adjust the opening degree of thereof.

A transmission line 40a is provided between the outdoor controller 27 and the indoor controller 36a so that various types of data can be exchanged between the controllers through the transmission line 40a.

Similarly, the indoor controllers 36b, 36c, 36d of the other indoor units 3b, 3c, 3d are also connected to the outdoor controller 27 by transmission lines 40b, 40c, 40d.

The outdoor control unit 27 controls the operating frequency of the compressor 20 in accordance with various conditions during operation and thereby controls the air conditioning operation of the air conditioner. Meanwhile, the indoor controllers 36a, 36b, 36c, 36d control the opening degree pulses of the electric motor operated valves 33a in accordance with various conditions during operation and thereby control the air conditioning operation of the air conditioner. The outdoor controller 27 also executes feedback control to set the opening degrees of the electric motor operated valves 33b, 33c, 33d corresponding to the stopped indoor units 3b, 3c, 3d based on the temperature of the discharge pipe and, simultaneously, revises the opening degree of each electric motor operated valve 33b, 33c, 33d on an individual basis. Following is a description of the control executed with respect to the electric motor operated valves 33b, 33c, 33d corresponding to the indoor units 3b, 3c, 3d that are stopped.

<Control of the Electric Motor Operated Valves in the Stopped Rooms>

A multiple-unit type air conditioner is configured to air condition a plurality of rooms with a plurality of indoor units each arranged in separate rooms, but not all of the indoor units are necessarily run at the same time. Thus, there are situations in which one or more indoor units are run and the remaining indoor units are stopped. The control executed with respect to the electric motor operated valves corresponding to indoor units that are stopped in such a situation, i.e., when the air conditioner is operating in heating mode with a plurality of the indoor units in a stopped condition, will now be explained. In the explanation, the term "running room" will refer to a room in which an indoor unit 3 a that is running is installed and the term "stopped room" will refer to a room in which an indoor unit 3b, 3c, 3d that is stopped is installed.

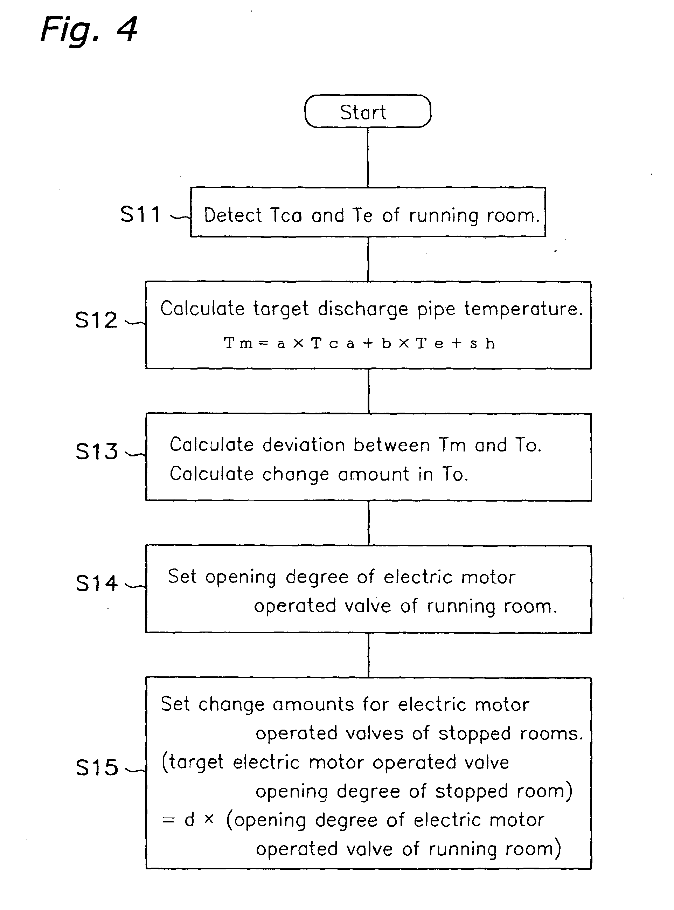

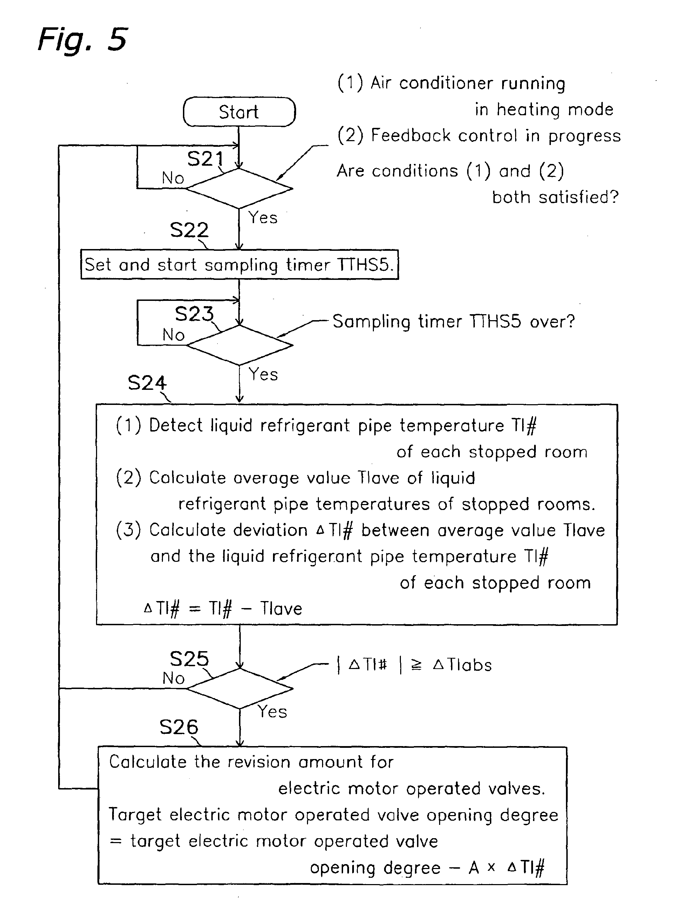

Figures 4 and 5 are control flowcharts for the electric motor operated valves 33b, 33c, 33d corresponding to the stopped rooms.

The control presented in the flowchart of Figure 4 functions to set the opening degree of the electric motor operated valve 33a corresponding to the running room based on the discharge pipe temperature To and to set the opening degrees of the electric motor operated valves 33b, 33c, 33d corresponding to the stopped rooms to values that are proportional to the opening degree of the electric motor operated valve 33a corresponding to the running room, which has just been set based on the discharge pipe temperature To.

In step S11, the condensation temperature Tca of the indoor heat exchanger 30a of the running room and the evaporation temperature Te of the outdoor heat exchanger 22 are detected by means of the indoor heat exchanger thermistor 32a and the outdoor heat exchanger thermistor 26, respectively.

In step S12, a target discharge pipe temperature Tm is calculated using Equation (1) shown below.

$$\mathrm{Tm} = a \times \mathrm{Tca} + b \times \mathrm{Te} + sh \qquad (1)$$

Here, a and *b* are prescribed constants and *sh* is a revision quantity based on the outdoor air temperature.

In step S 13, the deviation between the target discharge pipe temperature Tm and the discharge pipe temperature To detected by the discharge pipe thermistor 24 is calculated and the amount of change in the discharge pipe temperature To per unit time is calculated.

In step S14, the opening degree of the electric motor operated valve 33a corresponding to the running room is set.

In step S15, the opening degrees of the electric motor operated valves 33b, 33c, 33d corresponding to the stopped rooms are set. More specifically, a target electric motor operated valve opening degree for the electric motor operated valves 33b, 33c, 33d corresponding to the stopped rooms is obtained by multiplying the opening degree of the electric motor operated valve 33a corresponding to the running room by a coefficient *d*.

Next, the aforementioned target electric motor operated valve opening degree is revised separately for each electric motor operated valve 33b, 33c, 33d corresponding to the stopped room as shown in the flowchart of Figure 5.

First, in step S21, it is determined if the following two conditions are both satisfied: (1) the air conditioner 1 is running in heating mode; and (2) the electric motor operated valves 33b, 33c, 33d are being controlled by feedback control. If both conditions are satisfied, control proceeds to step S22.

In step S22, the sampling timer TTHS5 is set to a prescribed value and started. In step S23, it is determined if the sampling timer TTHS5 has reached a prescribed time value. If the sampling timer TTHS5 has reached the prescribed time value, control proceeds to step S24.

In step S24, the following three tasks are performed in order as listed: (1) the liquid refrigerant pipe temperature Tl# of each stopped room is detected; (2) the average value Tlave of the liquid refrigerant pipe temperatures of the stopped rooms is calculated; and (3) the deviations ΔTl# between the average value Tlave and the liquid refrigerant pipe temperature Tl# of each stopped room are calculated. Here, the symbol # indicates the symbols b, c, and d assigned to the respective indoor units of the stopped rooms.

In step S25, it is determined if the absolute values of the temperature deviations found in step S24 for each stopped room are equal to or greater than a prescribed value Tlabs. If the absolute value of any of the deviations is equal to or greater than the prescribed value, control proceeds to step S25. If the absolute values of all of the deviations are less than the prescribed value, control returns to step S21.

In step S26, the revision amounts for the opening degrees of the electric motor operated valves 33b, 33c, 33d are calculated and the opening degrees of the electric motor operated valves 33b, 33c, 33d are revised individually for each stopped room. The opening degree revision amounts are calculated by multiplying the temperature deviation by a negative coefficient. The liquid refrigerant pipe temperature Tl# increases when the flow rate of refrigerant to the indoor heat exchanger is large and the liquid refrigerant pipe temperature Tl# decreases when the flow rate of refrigerant to the indoor heat exchanger is small. Therefore, the opening degrees of the electric motor operated valves corresponding to stopped rooms where the liquid refrigerant pipe temperature Tl# is low are revised to larger values and the opening degrees of electric motor operated valves corresponding to stopped rooms where the liquid refrigerant pipe temperature Tl# is high are revised to smaller values.

<Characteristic Features of the Air Conditioner 1>

With this air conditioner 1, in addition to controlling the opening degree of the electric motor operated valves 33b, 33c, 33d corresponding to the stopped rooms based on the discharge pipe temperature To, the opening degree of each electric motor operated valve 33b, 33c, 33d is controlled individually in such a manner that the liquid refrigerant pipe temperature Tl# of each indoor unit 3b, 3c, 3d corresponding to the stopped room is held within a prescribed difference with respect to the average value of the liquid refrigerant pipe temperatures Tlb, Tlc, Tld of all the indoor units 3b, 3c, 3d corresponding to the stopped rooms. Consequently, the amount of refrigerant flowing through each of the indoor units 3b, 3c, 3d corresponding to the stopped rooms can be approximately equalized even when the floors on which the indoor units 3b, 3c, 3d are installed are different, the room temperatures are different, or some other difference exists in the ambient conditions to which the indoor units 3b, 3c, 3d are exposed. As a result, the electric motor operated valves 33b, 33c, 33d corresponding to the stopped rooms can be controlled in a more refined manner than when the opening degrees of the electric motor operated valves 33b, 33c, 33d corresponding to the stopped rooms are merely controlled based on the discharge pipe temperature To. Thus, more stable refrigerant control can be executed even when there is a plurality of stopped rooms.

During the revision of the opening degree of the electric motor operated valves 33b, 33c, 33d, the controller determines if the deviation ΔTl# between the liquid refrigerant pipe temperature Tl# of each stopped room and the average value Tlave is greater than or equal to a prescribed value and does not revise the opening degree of electric motor operated valves corresponding to stopped rooms where the deviation ΔTl# is small. Thus, modification of the opening degree can be omitted when the deviation ΔTl# is small and it is determined that the effects of uneven refrigerant flow distribution are small.

(Industrial Applicability)

When an air conditioner in accordance with the present invention is used, the opening degrees of the electric motor operated valves corresponding to indoor units that are stopped are revised on an individual basis by the electric motor operated valve opening degree revising means instead of being controlled uniformly across the board. As a result, stable refrigerant control can be executed even when the air conditioner is operating in heating mode with a plurality of indoor units in a stopped state.

**Claims**

1. An air conditioner, comprising:

     an outdoor unit (2) having an outdoor heat exchanger (22);
     a plurality of indoor units (3a, 3b, 3c, 3d) each having an indoor heat exchanger (30a, 30b, 30c, 30d);

a refrigerant circuit (5) linking the outdoor heat exchanger (22), a compressor (20), and a plurality of the indoor heat exchangers (30a, 30b, 30c, 30d) together;

a plurality of electric motor operated valves (33a, 33b, 33c, 33d) provided in the refrigerant circuit (5) and configured to adjust the amount of refrigerant flowing into each of the indoor heat exchangers (30a, 30b, 30c, 30d), respectively;

a discharge pipe temperature sensor (24) configured to detect the temperature of the discharge pipe of the compressor (20); and

an electric motor operated valve opening degree control means (27) configured such that, in situations in which a plurality of indoor units are stopped while the air conditioner is operating in heating mode, it controls the opening degrees of the electric motor operated valves (33b, 33c, 33d) corresponding to the stopped indoor units (3b, 3c, 3d) based on the temperature of the discharge pipe;

**characterized by**

an electric motor operated valve opening degree revising means (27) configured to revise the opening degrees of the electric motor operated valves (33b, 33c, 33d) corresponding to the stopped indoor units (3b, 3c, 3d) on an individual basis.

2. An air conditioner as recited in claim 1, wherein

liquid refrigerant pipe temperature sensors (34a, 34b, 34c, 34d) configured to detect the temperature of the liquid refrigerant pipes between each indoor heat exchanger (30a, 30b, 30c, 30d) and the corresponding electric motor operated valve (33a, 33b, 33c, 33d), respectively, are further provided; and

the electric motor operated valve opening degree revising means (27) is configured such that, in situations in which a plurality of indoor units (3b, 3c, 3d) are stopped while the air conditioner is operating in heating mode, it revises the opening degree of each electric motor operated valve (33b, 33c, 33d) corresponding to a stopped indoor unit (3b, 3c, 3d) individually in such a manner that the liquid refrigerant pipe temperature of each stopped indoor unit (3b, 3c, 3d) is held within a prescribed difference with respect to the average value of the liquid refrigerant pipe temperatures of all the stopped indoor units (3b, 3c, 3d).

3. A control method for an air conditioner (1) provided with

an outdoor unit (2) having an outdoor heat exchanger (22);

a plurality of indoor units (3a, 3b, 3c, 3d) each having an indoor heat exchanger (30a, 30b, 30c, 30d);

a refrigerant circuit (5) linking the outdoor heat exchanger (22), a compressor (20), and a plurality of the indoor heat exchangers (30a, 30b, 30c, 30d) together;

a plurality of electric motor operated valves (33a, 33b, 33c, 33d) provided in the refrigerant circuit (5) and configured to adjust the amount of refrigerant flowing into each of the indoor heat exchangers (30a, 30b, 30c, 30d), respectively; and

a discharge pipe temperature sensor (24) configured to detect the temperature of the discharge pipe of the compressor (20),

the control method having:

a first step in which, when a plurality of indoor units are stopped while the air conditioner is operating in heating mode, the opening degree of the electric motor operated valves (33b, 33c, 33d) corresponding to the stopped indoor units (3b, 3c, 3d) are set based on the temperature of the discharge pipe;

**characterized by**

a second step in which the opening degrees of the electric motor operated valves (33b, 33c, 33d) corresponding to the stopped indoor units are revised on an individual basis.

**Patentansprüche**

1. Klimaanlage mit:

einer Außenanlage (2) mit einem Außenwärmetauscher (22);

mehreren Innenanlagen (3a, 3b, 3c, 3d), die jeweils einen Innenwärmetauscher (30a, 30b, 30c, 30d) aufweisen;

einem Kühlmittelkreislauf (5), der den Außenwärmetauscher (22), einen Kompressor (20) und mehrere der Innenwärmetauscher (30a, 30b, 30c, 30d) miteinander verbindet;

mehreren Elektromotor-betriebenen Ventilen (33a, 33b, 33c, 33d), die in dem Kühlmittelkreislauf (5) angeordnet sind und jeweils ausgelegt sind, den Kühlmittelbetrag, der in jeden der Innenwärmetauscher (30a, 30b, 30c, 30d) strömt, einzustellen;

einem Ablassleitungs-Temperatursensor (24), der ausgelegt ist, die Temperatur der Ablassleitung des Kompressors (20) zu erfassen; und

einer Öffnungsgradsteuereinrichtung (27) der Elektromotor-betriebenen Ventile die derart ausgelegt ist, dass sie, in Fällen, in denen mehrere der Innenanlagen gestoppt sind, während die Klimaanlage im Wärmemodus operiert, die Öffnungsgrade der Elektromotor-betriebenen Ventile (33b, 33c, 33d), die den gestoppten Innenanlagen (3b, 3c, 3d) entsprechen, basierend auf der Temperatur der Ablassleitung steuert;

**gekennzeichnet durch**

eine Öffnungsgradkorrektureinrichtung (27) der Elektromotor-betriebenen Ventile, die ausgelegt ist, die Öffnungsgrade der Elektromotor-betriebenen Ventile (33b, 33c, 33d), die den gestoppten Innenanlagen (3b, 3c, 3d) entsprechen, einzeln zu korrigieren.

2. Klimaanlage nach Anspruch 1, bei der

ferner Flüssigkühlmittelleitungs-Temperatursensoren (34a, 34b, 34c, 34d) vorgesehen sind, die ausgelegt sind, jeweils die Temperatur der Flüssigkühlmittelleitungen zwischen jedem Innenwärmetauscher (30a, 30b, 30c, 30d) und dem entsprechenden Elektromotor-betriebenen Ventil (33a, 33b, 33c, 33d) zu erfassen; und

die Öffnungsgradkorrektureinrichtung (27) der Elektromotor-betriebenen Ventile derart ausgelegt ist, dass sie, in Fällen, in denen mehrere Innenanlagen (3b, 3c, 3d) gestoppt sind, während die Klimaanlage im Wärmemodus operiert, den Öffnungsgrad jedes Elektromotor-betriebenen Ventils (33b, 33c, 33d), das einer gestoppten Innenanlage (3b, 3c, 3d) entspricht, einzeln auf eine derartige Weise korrigiert, dass die Flüssigkühlmittelleitungs-Temperatur jeder gestoppten Innenanlage (3b, 3c, 3d) innerhalb einer vorbestimmten Differenz bezüglich des Durchschnittswerts der Flüssigkühlmittelleitungs-Temperaturen aller der gestoppten Innenanlagen (3b, 3c, 3d) gehalten ist.

3. Verfahren zum Steuern einer Klimaanalage (1), welche aufweist:

eine Außenanlage (2) mit einem Außenwärmetauscher (22);

mehreren Innenanlagen (3a, 3b, 3c, 3d), die jeweils einen Innenwärmetauscher (30a, 30b, 30c, 30d) aufweisen;

einen Kühlmittelkreislauf (5), der den Außenwärmetauscher (22), einen Kompressor (20) und mehrere der Innenwärmetauscher (30a, 30b, 30c, 30d) miteinander verbindet;

mehrere Elektromotor-betriebenen Ventile (33a, 33b, 33c, 33d), die in dem Kühlmittelkreislauf (5) angeordnet sind und jeweils ausgelegt sind, den Kühlmittelbetrag, der in jeden der Innenwärmetauscher (30a, 30b, 30c, 30d) strömt, einzustellen;

einen Ablassleitungs-Temperatursensor (24), der ausgelegt ist, die Temperatur der Ablassleitung des Kompressors (20) zu erfassen;

wobei das Verfahren

einen ersten Schritt aufweist, in dem, wenn mehrere der Innenanalagen gestoppt sind, während die Klimaanlage im Wärmemodus operiert, die Öffnungsgrade der Elektromotor-betriebenen Ventile (33b, 33c, 33d), die den gestoppten Innenanlagen (3b, 3c, 3d) entsprechen, basierend auf der Temperatur der Ablassleitung eingestellt werden;

**gekennzeichnet durch**

einen zweiten Schritt, in dem die Öffnungsgrade der Elektromotor-betriebenen Ventile (33b, 33c, 33d), die den gestoppten Innenanalagen entsprechen, einzeln korrigiert werden.

## Revendications

1. Climatiseur, comprenant :

une unité extérieure (2) ayant un échangeur de chaleur extérieur (22) ;

une pluralité d'unités intérieures (3a, 3b, 3c, 3d) ayant chacune un échangeur de chaleur intérieur (30a, 30b, 30b, 30d) ;

un circuit de fluide frigorigène (5) reliant l'échangeur de chaleur extérieur (22), un compresseur (20), et une pluralité d'échangeurs de chaleur intérieurs (30a, 30b, 30c, 30d) les uns aux autres ;

une pluralité de soupapes actionnées par un moteur électrique (33a, 33b, 33c, 33d) prévues dans le circuit de fluide frigorigène (5) et configurées pour ajuster la quantité de fluide frigorigène circulant dans chacun des échangeurs de chaleur intérieurs (30a, 30b, 30c, 30d), respectivement ;

un capteur de température (24) de tuyau de décharge configuré pour détecter la température du tuyau de décharge du compresseur (20) ; et

un moyen (27) de commande des degrés d'ouverture des soupapes actionnées par un moteur électrique configuré de sorte qu'il commande, dans des situations dans lesquelles une pluralité d'unités intérieures sont arrêtées tandis que le climatiseur fonctionne en mode de chauffage, les degrés d'ouverture des soupapes actionnées par un moteur électrique (33b, 33c, 33d) correspondant aux unités intérieures arrêtées (3b, 3c, 3d) sur la base de la température du tuyau de décharge ;

**caractérisé par**

un moyen (27) de révision des degrés d'ouverture des soupapes actionnées par un moteur électrique configuré pour réviser les degrés d'ouverture des soupapes actionnées par un moteur électrique (33b, 33c, 33d) correspondant aux unités intérieures arrêtées (3b, 3c, 3d) sur une base individuelle.

2. Climatiseur selon la revendication 1, dans lequel des capteurs de température (34a, 34b, 34c, 34d) de tuyau de fluide frigorigène liquide configurés pour détecter la température des tuyaux de fluide frigorigène liquide entre chaque échangeur de chaleur intérieur (30a, 30b, 30c, 30d) et la soupape actionnée par un moteur électrique correspondante (33a, 33b, 33c, 33d), respectivement, sont en outre prévus ; et

un moyen (27) de révision des degrés d'ouverture des soupapes actionnées par un moteur électrique est configuré de sorte qu'il révise, dans des situations dans lesquelles une pluralité d'unités intérieures (3b, 3c, 3d) sont arrêtées tandis que le climatiseur fonctionne en mode de chauffage, le degré d'ouverture de chaque soupape actionnée par un moteur électrique (33b, 33c, 33d) correspondant à une unité intérieure arrêtée (3b, 3c, 3d) individuellement de manière à ce que la température du tuyau de fluide frigorigène liquide de chaque unité intérieure arrêtée (3b, 3c, 3d) soit maintenue à une différence prescrite par rapport à la valeur moyenne des températures de tuyau de fluide frigorigène liquide de toutes les unités intérieures arrêtées (3b, 3c, 3d).

3. Procédé de commande pour un climatiseur (1) pourvu

d'une unité extérieure (2) ayant un échangeur de chaleur extérieur (22) ;

d'une pluralité d'unités intérieures (3a, 3b, 3c, 3d) ayant chacune un échangeur de chaleur intérieur (30a, 30b, 30c, 30d) ;

d'un circuit de fluide frigorigène (5) reliant l'échangeur de chaleur extérieur (22), un compresseur (20), et une pluralité d'échangeurs de chaleur intérieurs (30a, 30b, 30c, 30d) les uns aux autres ;

d'une pluralité de soupapes actionnées par un moteur électrique (33a, 33b, 33c, 33d) prévues dans le circuit de fluide frigorigène (5) et configurées pour ajuster la quantité de fluide frigorigène circulant dans chacun des échangeurs de chaleur intérieurs (30a, 30b, 30c, 30d), respectivement ; et

d'un capteur de température (24) de tuyau de décharge configuré pour détecter la température du tuyau de décharge du compresseur (20),

le procédé de commande comportant :

une première étape dans laquelle, lorsqu'une pluralité d'unités intérieures sont arrêtées tandis que le climatiseur fonctionne en mode de chauffage, les degrés d'ouverture des soupapes actionnées par un moteur électrique (33b, 33c, 33d) correspondant aux unités intérieures arrêtées (3b, 3c, 3d) sont réglés sur la base de la température du tuyau de décharge ;

**caractérisé par**

une deuxième étape dans laquelle les degrés d'ouverture des soupapes actionnées par un moteur électrique (33b, 33c, 33d) correspondant aux unités intérieures arrêtées sont révisés sur une base individuelle.

# Fig. 1

# Fig. 2

*Fig. 3*

# Fig. 4

Start

S11 — Detect Tca and Te of running room.

S12 — Calculate target discharge pipe temperature.
$$Tm = a \times Tca + b \times Te + sh$$

S13 — Calculate deviation between Tm and To.
Calculate change amount in To.

S14 — Set opening degree of electric motor
operated valve of running room.

S15 — Set change amounts for electric motor
operated valves of stopped rooms.
(target electric motor operated valve
opening degree of stopped room)
= d × (opening degree of electric motor
operated valve of running room)

# Fig. 5

```
        ┌──────────┐
        │  Start   │
        └──────────┘
             │
        S21  │
   No  ◇─────┤          (1) Air conditioner running
        │    │                        in heating mode
        │    │ Yes      (2) Feedback control in progress
        │    │          Are conditions (1) and (2)
   S22  │    │                         both satisfied?
        │    ▼
   ┌─────────────────────────────────────┐
   │ Set and start sampling timer TTHS5.  │
   └─────────────────────────────────────┘
             │
        S23  │
   No  ◇─────┤          Sampling timer TTHS5 over?
        │    │ Yes
   S24  │    ▼
```

| | |
|---|---|
| (1) Detect liquid refrigerant pipe temperature TI# of each stopped room | |
| (2) Calculate average value Tlave of liquid refrigerant pipe temperatures of stopped rooms. | |
| (3) Calculate deviation Δ TI# between average value Tlave and the liquid refrigerant pipe temperature TI# of each stopped room | |

$$\Delta TI\# = TI\# - Tlave$$

```
        S25
   No  ◇─────┤          | ΔTI# | ≧ ΔTlabs
        │    │ Yes
   S26  │    ▼
```

Calculate the revision amount for electric motor operated valves.

Target electric motor operated valve opening degree

= target electric motor operated valve opening degree − A × ΔTI#

**REFERENCES CITED IN THE DESCRIPTION**

**Patent documents cited in the description**

- JP 2001304713 A